# EUROPEAN PATENT APPLICATION

(11) **EP 4 786 815 A1**
(43) Date of publication of application: **05.08.2026**
(21) Application number: 25210262.9
(22) Date of filing: 22.10.2025
(51) Int. Cl.: F16F 9/04, F16F 9/32, F16F 9/43

(54) **AIR SPRING FOR VEHICLE**

(30) Priority: 04.02.2025 KR 20250013952
(71) Applicant: Hyundai Mobis Co., Ltd., Gangnam-gu Seoul 06141 (KR)
(72) Inventor: SEO, Dong Hwan, Yongin-si, Gyeonggi-do 16891 (KR); KIM, In Sup, Yongin-si, Gyeonggi-do 16891 (KR); LEE, Su Yong, Yongin-si, Gyeonggi-do 16891 (KR)
(74) Representative: Jung, Minkyu

(57) **Abstract**

An air spring for a vehicle is disclosed. The air spring includes an air container provided with a chamber therein, a pressure maintaining valve mounted to enable supply and discharge of compressed air to and from the air container, and a pressure valve filter installed at the air container and configured to block particulate matter that may flow into an inner end of the pressure maintaining valve at the air container. The pressure valve filter prevents particulate matter inevitably remaining in the air container during manufacturing and assembly from entering the pressure maintaining valve, thereby ensuring stable operability of the pressure maintaining valve and improving durability of the air spring.

## Description

### TECHNICAL FIELD

The present disclosure relates to technology associated with the structure of an air spring for a vehicle.

### BACKGROUND

Air suspension systems for vehicles are provided with air springs, and the air springs are provided with volume containers that receive compressed air from external sources.

Therefore, the volume containers are provided with pressure maintaining valves that receive compressed air from external compressors or valve bodies or discharge compressed air therefrom.

Furthermore, the volume containers may be configured to be provided with a plurality of chambers, and in this case, solenoid valves are provided to control communication between the plurality of chambers.

Recently, the volume containers are configured by coupling multiple components during manufacturing. During assembly of such components, unnecessary particulate matter may be generated in the volume containers due to various causes.

As described above, particles generated in the volume containers are difficult to completely remove even by cleaning processes due to the maze-like structure of the volume containers. Such particles may accumulate in the pressure maintaining valves or solenoid valves or block inlets to restrict behavior, thereby causing abnormal operation.

The above matters disclosed in this section are merely for enhancement of understanding of the general background of the disclosure and should not be taken as an acknowledgement or any form of suggestion that the matters form the related art already known to a person skilled in the art.

### SUMMARY

Therefore, the present disclosure has been made in view of the above problems, and it is an object of the present disclosure to provide an air spring for a vehicle configured to secure stable operability of pressure maintaining valves or solenoid valves from unnecessary particulate matter that inevitably remains in the volume container of the air spring.

The technical problems to be achieved by the present disclosure are not limited to the technical problems mentioned above, and other technical problems not mentioned will be clearly understood by those skilled in the art from the following description.

To accomplish the above and other objects, the present disclosure provides an air spring for a vehicle comprising: an air container having a chamber therein; a pressure maintaining valve configured to enable supply and discharge of compressed air to and from the air container; and a pressure valve filter installed in the air container and configured to block particulate matter from flowing into an inner end of the pressure maintaining valve at the air container.

The pressure valve filter may be provided at an inner side of a pressure valve assembly part provided for assembling the pressure maintaining valve to the air container in a form that surrounds an end of the pressure maintaining valve.

The pressure valve assembly part may be provided with a filter assembly boss that surrounds the end of the pressure maintaining valve and extends inwardly in a direction in which the pressure maintaining valve is inserted. The pressure valve filter may be retained at an inner end of the filter assembly boss.

The pressure valve filter may be attached to the end of the filter assembly boss and may be configured as a plate-type filter formed such that the direction vectors of the filter holes are all parallel to each other.

The pressure valve filter may be attached to the end of the filter assembly boss and may be configured as a three-dimensional filter formed such that direction vectors of at least some filter holes intersect with each other.

The pressure valve filter may be configured with a filter plate part integrally formed at the end of the filter assembly boss and a plurality of filter holes perforated in the filter plate part.

The air container may be provided with a plurality of chambers, a solenoid valve may be installed at the air container to enable communication or blocking between the plurality of chambers, and a solenoid valve filter may be provided to filter particulate matter in air flowing between the plurality of chambers by the solenoid valve.

The solenoid valve filter may be installed at each of the plurality of chambers that are communicated with or blocked from each other by the solenoid valve.

In accordance with the present disclosure, it is possible to secure stable operability of pressure maintaining valves or solenoid valves from unnecessary particulate matter that inevitably remains in the volume container of the air spring.

The effects that can be obtained from the present disclosure are not limited to the effects mentioned above, and other effects not mentioned will be clearly understood by those skilled in the art from the following description.

### BRIEF DESCRIPTION OF THE DRAWINGS

The above and other objects, features and other advantages of the present disclosure will be more clearly understood from the following detailed description taken in conjunction with the accompanying drawings, in which:
FIG. 1 shows an example of an air spring for a vehicle to which the present disclosure may be applied.
FIG. 2 is a cross-sectional view illustrating the air container of FIG. 1 in detail.
FIG. 3 shows an example provided with a pressure valve filter according to the present disclosure.
FIG. 4 shows another example provided with a pressure valve filter according to the present disclosure.
FIG. 5 is a cross-sectional view taken along line V-V in FIG. 4.
FIG. 6 shows an upper side of a middle part with an upper part of FIG. 2 removed.
FIG. 7 is a detailed view of portion VII in FIG. 6.
FIG. 8 shows an example provided with a solenoid valve filter according to the present disclosure.

### DETAILED DESCRIPTION

Hereinafter, embodiments of the present disclosure will be described in detail with reference to the accompanying drawings. The same or similar elements are designated by the same reference numerals regardless of the numerals in the drawings, and redundant description thereof will be omitted.

In describing the embodiments disclosed in this specification, when it is determined that detailed descriptions of related known technologies may obscure the gist of the embodiments disclosed in this specification, the detailed descriptions will be omitted. Furthermore, the accompanying drawings are provided only to facilitate understanding of the embodiments disclosed in this specification, and the technical concepts disclosed in this specification are not limited by the accompanying drawings, and should be understood to include all modifications, equivalents, and substitutes included in the spirit and technical scope of the present disclosure.

Terms including ordinal numbers such as first and second may be used to describe various components, but the components are not limited by the terms. The terms are used only for the purpose of distinguishing one component from another component.

Singular expressions include plural expressions unless the context clearly indicates otherwise.

In this specification, terms such as "include" or "have" are intended to designate that features, numbers, steps, operations, components, parts, or combinations thereof described in the specification exist, and should be understood not to preclude the existence or addition possibility of one or more other features, numbers, steps, operations, components, parts, or combinations thereof.

The suffixes "module" and "part" for components used in the following description are given or mixed only in consideration of ease of specification preparation, and do not have meanings or roles that are distinct from each other.

When a component is referred to as being "connected" or "coupled" to another component, it should be understood that it may be directly connected or coupled to the other component, but other components may exist in between. On the other hand, when a component is referred to as being "directly connected" or "directly coupled" to another component, it should be understood that no other components exist in between.

Among the configurations described in this specification, any number of components or various components in any configuration may be included in the disclosure described in this specification. The components may include any combination of features described in this specification and may be arranged in any configuration among various configurations described in this specification. Concepts regarding the structure and arrangement of components of the present disclosure as well as their use and operation may be applied not only to specific embodiments discussed in this specification but also to any number of embodiments in any combination. Embodiments including those having various features of various arrangements are described below with reference to the drawings.

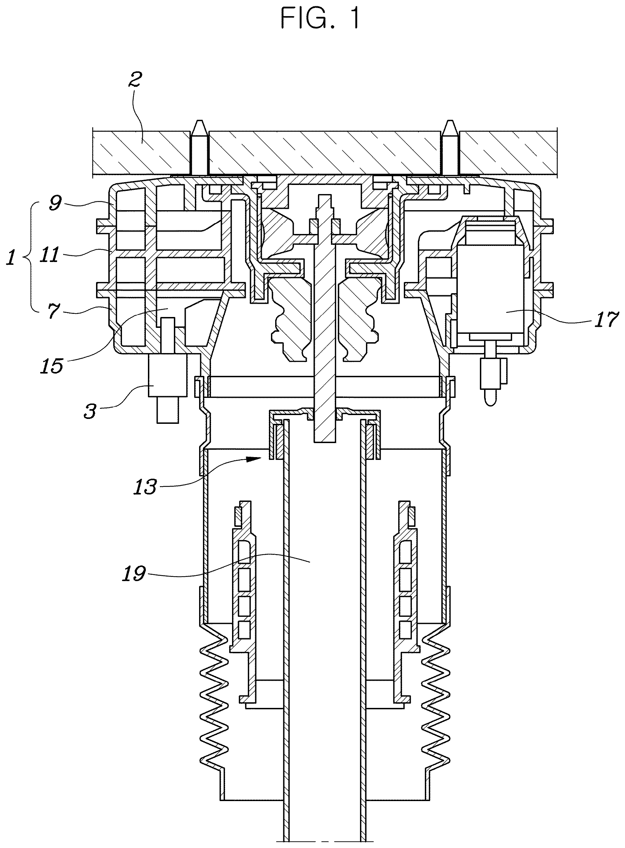

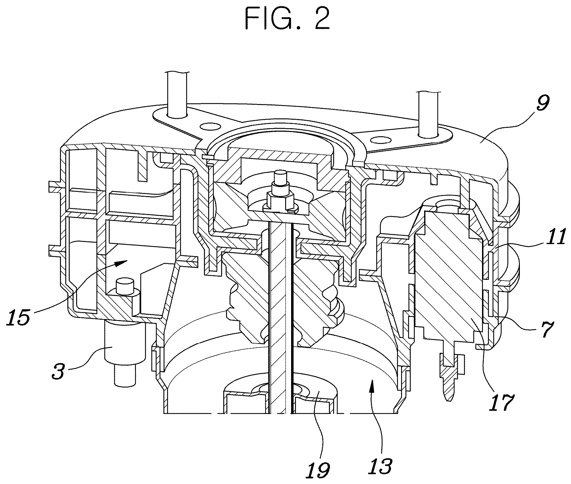

Referring to FIGs. 1 to 8, an embodiment of the air spring for a vehicle according to the present disclosure comprises an air container 1 provided with a chamber therein, a pressure maintaining valve 3 mounted to enable supply and discharge of compressed air to and from the air container 1, and a pressure valve filter 5 installed at the air container 1 and configured to block particulate matter that may flow into an inner end of the pressure maintaining valve 3 at the air container 1.

That is, the present disclosure is configured to provide the pressure valve filter 5 at an end of the pressure maintaining valve 3 provided for supplying or discharging compressed air to and from the air container 1, thereby preventing particulate matter that may remain in an interior of the air container 1 during manufacturing and assembly of the air container 1 from flowing into the pressure maintaining valve 3, enabling continuous maintenance of smooth and stable operability of the pressure maintaining valve 3, and improving durability of the air spring.

For reference, the air spring of FIG. 1 is mounted at a lower side of a vehicle body 2, and the air container 1 constituting the air spring is configured such that a lower part 7 at the lowermost side, an upper part 9 at the uppermost side, and a middle part 11 interposed between the lower part 7 and the upper part 9 are coupled to partition a first chamber 13 and a second chamber 15 therein. The pressure maintaining valve 3 is coupled to a lower side of the lower part 7 to enable supply of compressed air to the second chamber 15, and a solenoid valve 17 is installed in a state penetrating the lower part 7 and the middle part 11, such that the solenoid valve 17 can control air flow between the first chamber 13 communicating with a space around a shock absorber 19 and the second chamber 15.

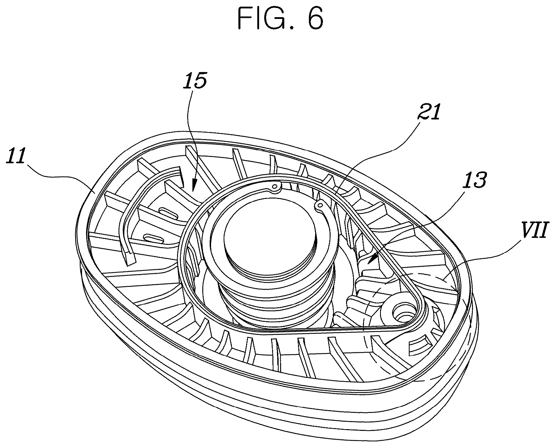

For reference, FIG. 6 shows the middle part 11 observed from an upper side, where an outer side from a central partition rib 21 belongs to the second chamber 15, an inner side belongs to the first chamber 13, and the solenoid valve 17 is installed at a lower side of the partition rib 21 to enable communication or blocking between the first chamber 13 and the second chamber 15.

The pressure valve filter 5 may be provided at an inner side of a pressure valve assembly part 23 provided for assembling the pressure maintaining valve 3 to the air container 1 in a form that surrounds an end of the pressure maintaining valve 3.

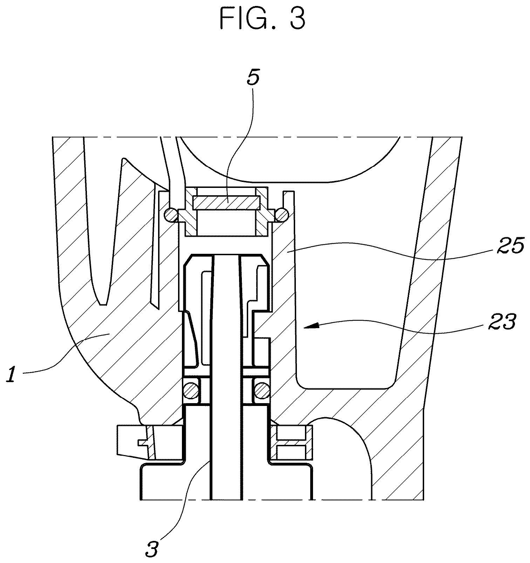

Referring to FIG. 3, the pressure valve assembly part 23 is provided with a filter assembly boss 25 that extends inwardly while surrounding an end of the pressure maintaining valve 3 along a direction in which the pressure maintaining valve 3 is inserted, and the pressure valve filter 5 is provided at an end of the filter assembly boss 25.

Of course, instead of the pressure valve filter 5 being inserted into the filter assembly boss 25 as shown in FIG. 3, the pressure valve filter 5 may be configured as a plate-type filter attached to the end of the filter assembly boss 25.

In this case, when a direction in which holes are perforated in filter holes 29 through which air passes is referred to as a direction vector of the filter holes 29, the plate-type filter may be formed such that direction vectors of the filter holes 29 are all parallel to each other.

Alternatively, the pressure valve filter 5 may be attached to the end of the filter assembly boss 25 and may be configured as a three-dimensional filter formed such that the direction vectors of at least some filter holes 29 intersect with each other.

That is, the three-dimensional filter may have a shape in which direction vectors of the filter holes 29 at least partially intersect with each other by filter holes 29 having direction vectors parallel to a direction in which the pressure maintaining valve 3 is inserted into the pressure valve assembly part 23 as well as filter holes 29 formed on lateral surfaces inclined thereto.

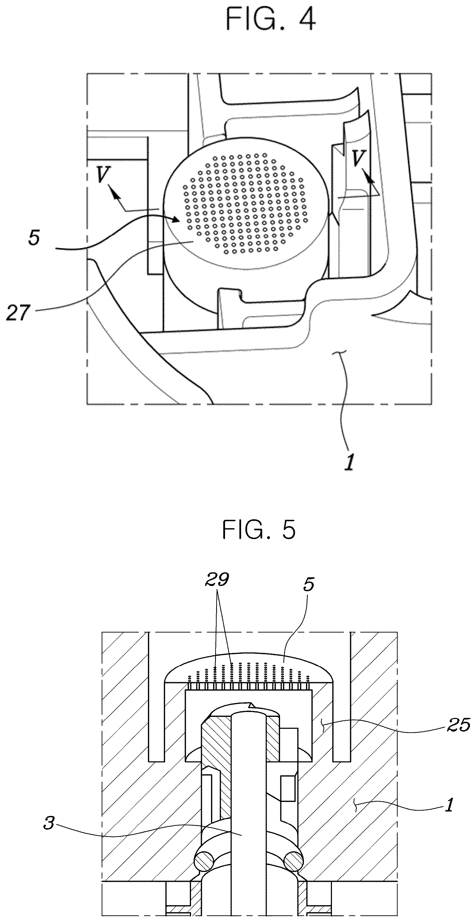

Furthermore, as exemplified in FIGs. 4 and 5, the pressure valve filter 5 may be configured with a filter plate part 27 integrally formed at the end of the filter assembly boss 25 and a plurality of filter holes 29 perforated in the filter plate part. In this case, during molding of the lower part 7, the pressure valve filter 5 may be molded together, thereby enabling securing of operability and durability of the pressure maintaining valve 3 while reducing the number of required components.

In addition, the pressure valve filter 5 may be implemented by a method such as adhering or fusing a fabric filter or metal filter to the filter assembly boss 25.

Meanwhile, as described above, the air container 1 is provided with a plurality of chambers, and the solenoid valve 17 is installed at the air container 1 to enable communication or blocking between the plurality of chambers. In an air spring provided with the solenoid valve 17 as such, a solenoid valve filter may be additionally provided to filter particulate matter in air flowing between the plurality of chambers by the solenoid valve 17.

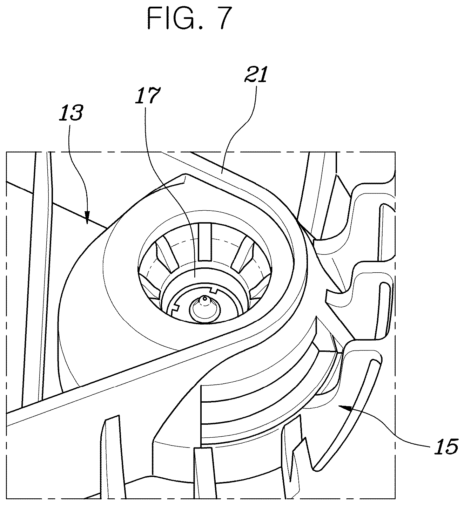

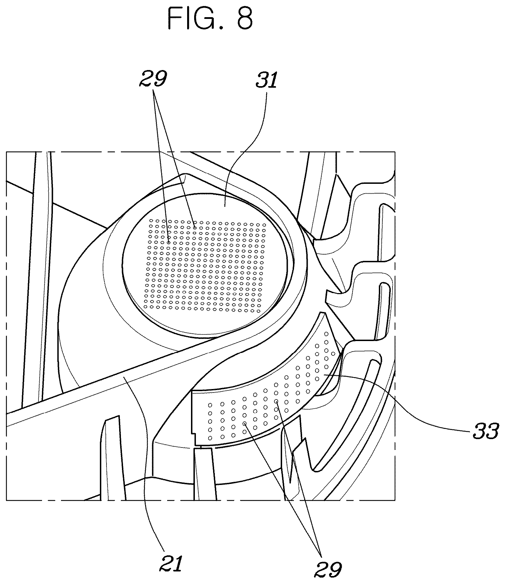

FIG. 7 is a detailed view illustrating in detail a portion where the solenoid valve 17 of FIG. 6 is mounted, showing that the solenoid valve 17 is installed to control a passage provided to communicate the first chamber 13 and the second chamber 15 at a lower side of the partition rib 21. In comparison with this, FIG. 8 exemplifies installation of a solenoid valve filter in a structure similar to FIG. 7.

The solenoid valve filter is installed at each of the plurality of chambers that are communicated with or blocked from each other by the solenoid valve 17.

That is, as exemplified in FIG. 8, the solenoid valve filter is configured such that a first solenoid valve filter 31 is installed at an upper side of the solenoid valve 17 at an inner side of the partition rib 21 to remove particulate matter from air flowing between the first chamber 13 and the solenoid valve 17, and a second solenoid valve filter 33 is installed at a portion of an outer surface of the partition rib 21 to enable removal of particulate matter from air flowing between the second chamber 15 and the solenoid valve 17.

Therefore, even when air flow between the first chamber 13 and the second chamber 15 is repeated according to repetitive operation of the solenoid valve 17, residual particulate matter in the air container 1 does not directly penetrate into an interior of the solenoid valve 17, thereby enabling significant improvement of operational stability and durability of the solenoid valve 17.

Although the preferred embodiments of the present disclosure have been disclosed for illustrative purposes, those skilled in the art will appreciate that various modifications, additions and substitutions are possible, without departing from the scope and spirit of the disclosure as disclosed in the accompanying claims.

## Claims

1. An air spring for a vehicle comprising:
an air container having a chamber therein;
a pressure maintaining valve configured to enable supply and discharge of compressed air to and from the air container; and
a pressure valve filter arranged in the air container and configured to block particulate matter from flowing into an inner end of the pressure maintaining valve at the air container.

2. The air spring for a vehicle according to claim 1, wherein the pressure valve filter is mounted in a pressure valve assembly part, the pressure valve assembly part surrounding an end of the pressure maintaining valve and securing the pressure maintaining valve to the air container.

3. The air spring for a vehicle according to claim 2, wherein:
the pressure valve assembly part includes a filter assembly boss that extends inwardly in a direction in which the pressure maintaining valve is inserted and surrounds the end of the pressure maintaining valve, and
the pressure valve filter is attached to at an inner end of the filter assembly boss.

4. The air spring for a vehicle according to any one of claims 1 to 3, wherein the pressure valve filter comprises a plate-type filter having filter holes arranged such that direction vectors of the filter holes are all parallel to each other.

5. The air spring for a vehicle according to any one of claims 1 to 3, wherein the pressure valve filter comprises a three-dimensional filter having filter holes arranged such that direction vectors of at least some of the filter holes intersect with each other.

6. The air spring for a vehicle according to claim 3, wherein the pressure valve filter has a filter plate part that is integrally formed at the end of the filter assembly boss and a plurality of filter holes perforated in the filter plate part.

7. The air spring for a vehicle according to any one of claims 1 to 6, wherein:
the air container includes a plurality of chambers,
a solenoid valve is installed in the air container and is operable to open and close a flow path between the plurality of chambers, and
at least one solenoid valve filter is positioned to filter particulate matter from air flowing in the flow path between the plurality of chambers by the solenoid valve.

8. The air spring for a vehicle according to claim 7, wherein the at least one solenoid valve filter includes a solenoid valve filter installed at each of the plurality of chambers to filter the particular matter from the air flowing into the chambers.
